# DEMANDE DE BREVET EUROPEEN

(11) **EP 1 712 321 A1**
(43) Date de publication de la demande: **18.10.2006**
(21) Numéro de dépôt: 05102871.0
(22) Date de dépôt: 12.04.2005
(51) Int. Cl.: B23K 9/18, B23K 35/36, B31B 39/00, B32B 27/08, B65D 65/40, B32B 7/00

(54) **Emballage de conditionnement de flux de soudage, comportant une structure 'sandwich' de type polymère/feuille métallique ; Procédé de conditionnement d'un flux de soudage dans un tel emballage ; Procédé de soudage à l'arc mettant en oeuvre un flux de soudage conditionné dans un tel emballage**

(71) Demandeur: OERLIKON SCHWEISSTECHNIK GMBH, 67299 Eisenberg/Pfalz (DE)
(72) Inventeur: STARCK, Stephan, 67269, Grünstadt (DE)
(74) Mandataire: Pittis, Olivier

(57) **Abrégé**

L'invention est un emballage de conditionnement de flux de soudage ayant une forme de sac (1) et contenant un flux (5) de soudage, caractérisé en ce qu'il comporte au moins une couche de polymère thermo-soudable (3a,3b) et au moins une feuille métallique (2), superposées l'une à l'autre en une structure formant ledit sac (1). La structure formant ledit sac (1) comprend au moins une couche de polymère (3a,3b) recouvrant chacune des surfaces d'une feuille métallique (2), de préférence la structure formant le sac (1) est une structure «sandwich» de type polymère/feuille métallique/polymère. La feuille métallique (2) est une feuille d'aluminium ayant une épaisseur inférieure à 100 μm, de préférence entre 5 et 25 μm. L'invention comporte aussi un procédé de conditionnement de flux de soudage dans un tel emballage. L'invention comporte aussi un procédé de soudage à l'arc mettant en oeuvre un flux (5) de soudage conditionné dans un emballage en forme de sac (1) tel que défini précédemment.

## Description

L'invention concerne un emballage de conditionnement de flux de soudage, en particulier de flux de soudage à l'arc submergé ou de soudage electroslag.

Lors de la mise en oeuvre de certains procédés de soudage à l'arc, il est indispensable d'utiliser un flux granulaire ou pulvérulent venant à recouvrir la zone de soudage, c'est-à-dire le joint et l'arc, lors du soudage proprement dit, comme par exemple en soudage à l'arc submergé ou en soudage electroslag.

Or, ces flux de soudage sont sensibles à l'humidité et doivent donc être stockés à l'abri de toute source d'humidité, notamment de l'humidité ambiante.

Actuellement, les flux de soudage sont conditionnés selon trois méthodes, à savoir dans des emballages, tels des sac ou conteneurs, en polymères, en particulier en polyéthylène, des sacs en papier avec revêtement de polyéthylène, ou des boîtes ou conteneurs métalliques.

Or, ces conditionnements présentent certains inconvénients.

Ainsi, les conteneurs en polymères et les sacs en papier revêtus de polyéthylène ne permettent pas d'arrêter totalement la vapeur d'eau qui peut s'infiltrer, pendant le temps de stockage, à l'intérieur du conditionnement et y détériorer le flux qui s'y trouve et oblige donc l'utilisateur à sécher le flux avant usage, ce qui n'est ni très pratique, ni toujours fiable en conditions industrielles, et est aussi onéreux.

Par ailleurs, les conditionnements métalliques sont en général très onéreux et plus complexes à fabriquer. Ils sont aussi difficiles à manipuler, à mettre sur des palettes et à transporter.

Le problème qui se pose alors est de proposer un emballage de conditionnement de flux de soudage simple permettant de maintenir le flux qu'il contient à l'abri de l'humidité, même après un long temps de stockage, qui soit de fabrication facile et peu onéreuse, qui permette un transport et une manipulation aisés de flux ainsi conditionné.

La solution de l'invention est un emballage de conditionnement de flux de soudage ayant une forme de sac et contenant un flux de soudage, caractérisé en ce qu'il comporte au moins une couche de polymère thermo-soudable et au moins une feuille métallique, superposées l'une à l'autre en une structure formant ledit sac.

Selon le cas, l'emballage de l'invention peut comprendre l'une ou plusieurs des caractéristiques suivantes :
- la structure formant ledit sac comprend au moins une couche de polymère recouvrant chacune des surfaces d'une feuille métallique, c'est-à-dire que la structure est formée d'au moins deux couches de polymère situées de part et d'autre de la feuille de métal, de préférence la structure formant le sac est une structure « sandwich » de type polymère/feuille métallique/polymère.
- la feuille métallique est une feuille d'aluminium ayant une épaisseur inférieure à 100 µm, de préférence entre 5 et 25 µm.
- au moins une couche de polymère située vers l'intérieur du sac est une couche de polymère thermo-soudable, de préférence le polyéthylène.
- au moins une couche de polymère située vers l'extérieur du sac est une couche de polyéthylène ou de polyamide.
- il a une contenance inférieure à 3 m³, de préférence entre 0,005 à 2 m³.
- le sac est scellé le long d'une ligne ou zone de fermeture, après introduction du flux. La ligne ou zone de fermeture se situe au niveau ou à proximité de l'ouverture supérieure du sac par laquelle le flux est extrait du sac lors de son utilisation.
- la structure formant ledit sac comprend, successivement de l'intérieur du sac vers l'extérieur, une couche interne de polyéthylène, une feuille d'aluminium, une couche de polyamide et une couche externe de polyéthylène.

L'invention porte aussi sur l'utilisation d'un emballage selon l'invention pour conditionner un flux de soudage sous forme d'une poudre, de granulés ou leurs mélanges, ainsi que sur un procédé de soudage à l'arc mettant en oeuvre un flux de soudage conditionné dans un emballage en forme de sac selon l'invention, en particulier un procédé de soudage à l'arc submergé ou un procédé soudage *electroslag.*

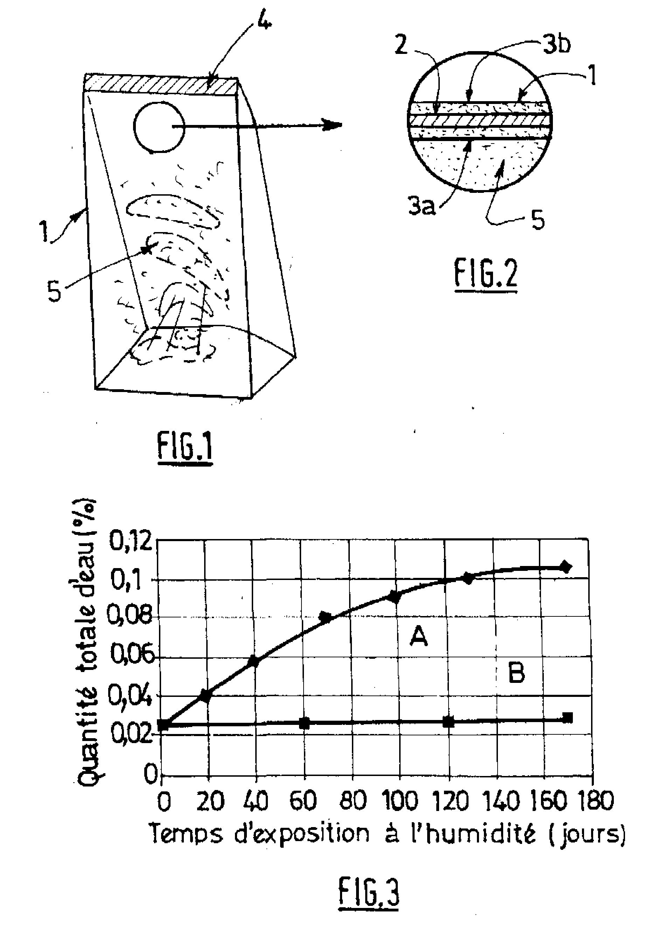

L'emballage de conditionnement de flux de l'invention est schématisé sur les figures 1 et 2 ci-annexées.

Comme montré en figure 1 , l'emballage a une forme de sac 1 contenant le flux 5 de soudage de manière à le maintenir à l'abri de l'humidité durant son transport ou son stockage.

La figure 2 est une vue grossière et en coupe de la zone encerclée sur la figure 1 du sac 1, permettant de bien voir la structure en « sandwich » du sac 1.

Plus précisément, la paroi du sac 1 est formée d'une couche d'aluminium 2, ayant une épaisseur préférentielle de 5 à 25 µm prise en « sandwich » entre une couche interne 3a de polymère thermo-soudable, en contact avec le flux 5, et une couche externe 3b de polymère. Les polymères des deux couches 3a, 3b peuvent être identiques ou différents.

De préférence, la couche interne 3a est en un polymère qui peut se souder sous l'action de la chaleur (polymère thermo-soudable), tel le polyéthylène, alors que la couche externe 3b peut être en polymère insoudable mais ayant une bonne résistance au poinçonnement.

Les couches 2 et 3a, 3b formant la structure « sandwich » peuvent être obtenues par solidarisation l'une à l'autre de feuilles superposées d'aluminium et de polymère thermo-soudable, tel que le polyéthylène qui est particulièrement bien adapté à l'invention.

Lors de la fermeture du sac 1, ses parois internes se faisant face viennent au contact l'une de l'autre, et les couches de polyéthylène 3a internes opposées peuvent être soudées à chaud et sous pression selon une ligne 4 de fermeture , comme visible en Figure 1.

Préalablement à cette fermeture hermétique, l'intérieur du sac 1 peut être soit mis sous vide par aspiration de l'atmosphère gazeuse qui s'y trouve, soit rempli d'une atmosphère gazeuse contrôlée sèche, de manière à débarrasser le sac 1 de toute humidité susceptible de s'y trouver.

A cette fin, le sac 1 peut être rempli d'une atmosphère gazeuse formé d'air sec ou d'un autre gaz sec par exemple un gaz inerte sec, tel l'azote ou l'argon. Dans tous les cas, le gaz sec introduit dans le sac 1 doit contenir préférentiellement moins de 0,1 % d'humidité, de préférence moins de 0,05% d'humidité.

La couche 2 d'aluminium permet de faire barrière à toute entrée d'humidité dans le sac 1 au fil du temps, et y garantir un maintien au sec du flux 5, malgré des temps de stockage longs. Les couches 3a, 3b de polyéthylène servent notamment à renforcer la résistance mécanique du sac 1.

La figure 3 montre le comportement, au fil du temps (en jours), du flux contenu dans un sac de conditionnement selon l'art antérieur (sac A) et de celui contenu dans un sac selon la présente invention (sac B) lorsque ces sacs sont placés dans une atmosphère humide afin de tester leur aptitude à préserver le flux qu'ils contiennent de l'humidité.

Le sac A est un sac selon l'art antérieur formé d'une feuille constituant une couche de polyéthylène de 150 µm d'épaisseur.

Le sac B est un sac selon l'invention, comprenant une couche de polyéthylène (comme le sac A), une couche additionnelle de 12 µm d'aluminium et une autre couche de polyéthylène. Autrement dit, le sac B est formé d'une structure sandwich constituée d'une feuille d'aluminium prise entre deux couches d'un revêtement de polyéthylène.

Le stockage des deux sacs se fait dans les mêmes conditions de température et d'humidité, à savoir 27°C et dans une humidité relative de 80%.

Comme on le voit, au départ (t = 0), le flux contenu dans les sacs A et B contient 0,02% en poids d'humidité, c'est-à-dire une teneur en eau courante dans les flux puisqu'un flux n'est presque jamais totalement dépourvu d'humidité résiduelle de cuisson.

Or, comme on le voit sur la figure 3, après 180 jours de stockage, le sac B selon l'invention a permis d'éviter toute entrée d'humidité dans le sac susceptible de venir au contact du flux qu'il contient.

A l'inverse, le sac A selon l'art antérieur est quasi-immédiatement contaminé par de l'humidité.

En pratique, on estime qu'un flux doit contenir au maximum 0,05% d'humidité et qu'au-delà, il doit être ré-étuvé (séché) avant emploi. En effet, opérer un soudage avec un flux trop humide peut engendrer des défauts dans le joint de soudage, tels que des micro-fissures, des porosités ou des fissures à froid, qui sont néfastes aux propriétés métallurgiques du joint.

Plus précisément, l'humidité présente dans le flux de soudage engendre un transfert en hydrogène dans la soudure lequel peut provoquer des fissures et/ou des porosités. Le maximum d'humidité tolérable dans un flux dépend du type d'acier qu'il va servir à souder : plus l'acier est à haute caractéristique mécanique, moins la soudure acceptera d'hydrogène sans fissurer. De plus, il dépend aussi du coefficient du transfert en hydrogène dans le métal fondu à partir de l'humidité du flux. Donc, pour chaque flux, il existe une relation humidité/hydrogène et il est possible de fixer une teneur maximale en hydrogène selon l'acier que l'on soude. Selon les flux et les aciers, il est souvent imposé que la teneur en humidité du flux au moment de l'utilisation en soudage soit inférieure à 0,04% voire 0,03%.

En appliquant ces critères, on constate que le flux du sac B selon l'invention peut être utilisé, sans aucune nécessité de ré-étuvage ou de séchage, après 180 jours de stockage, alors que le flux contenu dans le sac A selon l'art antérieur doit être ré-étuvé, dès lors qu'il est conservé plus de 32 jours environ.

La figure 3 montre donc clairement l'effet technique que permet d'obtenir un sac selon l'invention dont l'enveloppe ou paroi est composée de plusieurs couches 3a, 3b de polyéthylène ou autre polymère thermo-soudable, et d'une couche d'aluminium 2, comme expliqué ci-dessus.

Le sac 1 de l'invention peut comprendre plus de 2 ou 3 couches de polymère ou feuilles métalliques.

Ainsi, dans un mode particulièrement préféré, la structure formant le sac 1 de l'invention comprend, successivement de l'intérieur vers l'extérieur du sac, une couche interne de polyéthylène 3a venant en contact avec le flux 5, une feuille d'aluminium 2, une couche de polyamide et une couche externe de polyéthylène 3b en contact avec l'air ambiant.

En outre, on peut aussi envisager un sac 1 en une structure « composite » alternant au moins une couche de polymère, une feuille métallique, une couche de polymère, une feuille métallique et une couche de polymère.

Dans tous les cas, la fixation ou le dépôt des couches de polymère sur la feuille d'aluminium se fait par des techniques classiques, par exemple par co-laminage, co-extrusion ou toute autre technique adaptée.

## Revendications

1. Emballage de conditionnement de flux de soudage ayant une forme de sac (1) et contenant un flux (5) de soudage, **caractérisé en ce qu'**il comporte au moins une couche de polymère thermo-soudable (3a, 3b) et au moins une feuille métallique (2), superposées l'une à l'autre en une structure formant ledit sac (1).

2. Emballage selon la revendication 1, **caractérisé en ce que** la structure formant ledit sac (1) comprend au moins une couche de polymère (3a, 3b) recouvrant chacune des surfaces d'une feuille métallique (2), de préférence la structure formant le sac (1) est une structure « sandwich » de type polymère/feuille métallique/polymère.

3. Emballage selon la revendication 1 ou 2, **caractérisé en ce que** la feuille métallique (2) est une feuille d'aluminium ayant une épaisseur inférieure à 100 µm, de préférence entre 5 et 25 µ m.

4. Emballage selon les revendications 1 à 3, **caractérisé en ce qu'**au moins une couche de polymère (3a) située vers l'intérieur du sac (1) est une couche de polymère thermo-soudable, de préférence le polyéthylène.

5. Emballage selon les revendications 1 à 4, **caractérisé en ce qu'**au moins une couche de polymère (3b) située vers l'extérieur du sac (1) est une couche de polyéthylène ou de polyamide.

6. Emballage selon les revendications 1 à 5, **caractérisé en ce qu'**il a une contenance inférieure à 3 m³, de préférence entre 0,005 à 2 m³.

7. Emballage selon les revendications 1à 6, **caractérisé en ce que** le sac (1) est scellé le long d'une ligne ou zone (4) de fermeture, après introduction du flux (5).

8. Emballage selon les revendications 1 à 7, **caractérisé en ce que** la structure formant ledit sac (1) comprend, successivement de l'intérieur du sac (1) vers l'extérieur, une couche interne de polyéthylène (3a), une feuille d'aluminium (2), une couche de polyamide et une couche externe de polyéthylène (3b).

9. Utilisation d'un emballage selon l'une des revendications 1 à 8 pour conditionner un flux de soudage sous forme d'une poudre, de granulés ou leurs mélanges.

10. Procédé de soudage à l'arc mettant en oeuvre un flux (5) de soudage conditionné dans un emballage en forme de sac (1) selon l'une des revendications 1 à 8, en particulier un procédé de soudage à l'arc submergé ou un procédé soudage *electroslag.*

11. Procédé de conditionnement de flux de soudage, dans lequel on procède selon les étapes de :
a) introduire un flux de soudage dans un emballage en forme de sac (1) selon l'une des revendications 1 à 8,
b) fermer hermétiquement ledit sac contenant le flux.

12. Procédé de conditionnement selon la revendication 11, **caractérisé en ce qu'**il comprend une étape c) telle que :
c) mise sous vide au moins partiel de l'intérieur du sac obtenu à l'étape a) par aspiration d'au moins une partie de l'atmosphère gazeuse contenue dans ledit sac, préalablement à sa fermeture à l'étape b).

13. Procédé de conditionnement selon l'une des revendications 11 ou 12, **caractérisé en ce qu'**il comprend une étape d) telle que :
d) introduction à l'intérieur du sac obtenu à l'étape a) d'un gaz ou d'un mélange gazeux sec, de préférence de l'azote, de l'argon ou un mélange argon/azote.

## Revendications modifiées

### Revendications modifiées conformément à la règle 86(2) CBE.

**1.** Emballage de conditionnement de flux de soudage ayant une forme de sac (1) de contenance inférieure à 3 m³, et contenant un flux (5) de soudage, ledit sac comportant au moins une feuille (2) d'aluminium ayant une épaisseur entre 5 et 25 µm, et au moins une couche de polymère (3a, 3b) recouvrant chacune des surfaces de la feuille (2) d'aluminium, lesdites feuille d'aluminium (2) et couches de polymère (3a, 3b) étant superposées les unes aux autres en une structure «sandwich» de type polymère/feuille d'aluminium/polymère pour former ledit sac (1), **caractérisé en ce qu'**au moins l'une desdites couches de polymère (3a, 3b) est formée d'un polymère thermo-soudable, et au moins une couche de polymère (3a) thermo-soudable est située vers l'intérieur du sac (1).

**2.** Emballage selon la revendication 1, **caractérisé en ce que** le polymère (3a) thermo-soudable est le polyéthylène

**3.** Emballage selon la revendication 1 ou 2, **caractérisé en ce qu'**au moins une couche de polymère (3b) située vers l'extérieur du sac (1) est une couche de polyéthylène ou de polyamide.

**4.** Emballage selon les revendications 1 à 3, **caractérisé en ce qu'**il a une contenance entre 0,005 à 2 m³.

**5.** Emballage selon les revendications 1 à 4, **caractérisé en ce que** le sac (1) est scellé le long d'une ligne ou zone (4) de fermeture, après introduction du flux (5).

**6.** Emballage selon les revendications 1 à 5, **caractérisé en ce que** la structure formant ledit sac (1) comprend, successivement de l'intérieur du sac (1) vers l'extérieur, une couche interne de polyéthylène (3a), une feuille d'aluminium (2), une couche de polyamide et une couche externe de polyéthylène (3b).

**7.** Utilisation d'un emballage selon l'une des revendications 1 à 6 pour conditionner un flux de soudage sous forme d'une poudre, de granulés ou leurs mélanges.

**8.** Procédé de soudage à l'arc mettant en oeuvre un flux (5) de soudage conditionné dans un emballage en forme de sac (1) selon l'une des revendications 1 à 6, en particulier un procédé de soudage à l'arc submergé ou un procédé soudage *electroslag.*
